# EUROPÄISCHE PATENTSCHRIFT

(11) **EP 4 205 995 B1**
(45) Veröffentlichungstag und Bekanntmachung des Hinweises auf die Patenterteilung: **16.04.2025**
(21) Anmeldenummer: 22214190.5
(22) Anmeldetag: 16.12.2022
(51) Int. Cl.: B44C 3/00, B60Q 1/38, G09F 13/00, B60R 13/00, B60Q 3/00, B60Q 1/26, B32B 7/023, B32B 38/10, B44F 1/02, B60Q 1/28, B60Q 1/30, B60Q 1/32, B60R 13/04, B44F 1/06, B44C 1/22

(54) **VERFAHREN ZUR HERSTELLUNG EINES AUSSENVERKLEIDUNGSTEILS FÜR EIN KRAFTFAHRZEUG**
METHOD FOR PRODUCING AN OUTER TRIM PART FOR A MOTOR VEHICLE
PROCÉDÉ DE FABRICATION D'UN ÉLÉMENT DE GARNITURE EXTÉRIEUR POUR UN VÉHICULE AUTOMOBILE

(30) Priorität: 22.12.2021 DE 102021134377
(43) Veröffentlichungstag der Anmeldung: 05.07.2023
(73) Patentinhaber: REHAU Automotive SE & Co. KG, 95111 Rehau (DE)
(72) Erfinder: Göschel, Rick, 95183 Feilitzsch (DE); Kätzel, Patrick, 95111 Rehau (DE); Reichstein, Johann, 95448 Bayreuth (DE)

(56) Entgegenhaltungen:
- WO-A2-2020/078916
- DE-A1- 102017 120 532
- DE-A1- 102019 118 640
- DE-A1- 102019 131 524
- DE-A1- 19 720 723
- US-A1- 2009 237 939

## Beschreibung

Die vorliegende Erfindung betrifft ein Verfahren zur Herstellung eines Außenverkleidungsteils für ein Kraftfahrzeug, umfassend die folgenden Schritte:
- Bereitstellen eines das Außenverkleidungsteil definierenden Grundkörpers, wobei der Grundkörper aus einem für Licht transparenten oder transluzenten Kunststoffmaterial besteht und eine bestimmungsgemäße Sichtseite und eine der Sichtseite gegenüberliegenden Rückseite aufweist, wobei eine Vielzahl von Erhebungen, die von der Oberfläche der Sichtseite des Grundkörpers abstehen vorgesehen sind, die einstückig mit dem Grundkörper ausgebildet sind;
- Aufbringen einer lichtundurchlässigen Farbschicht auf die Sichtseite des Grundkörpers und auf die Erhebungen des Grundkörpers.

Bei aus dem Stand der Technik bekannten Verfahren bzw. Außenverkleidungsteilen war es aufgrund der Erhebungen bisher nicht möglich einen Grundkörper so zu gestalten, dass selektiv nur im Bereich der Erhebungen beleuchtet werden kann, wenn im Bereich der Rückseite eine Lichtquelle angeordnet wird.

Ein gattungsgemäßes Verfahren kann dem Dokument DE 10 2017 120 532 A1 entnommen werden. Ein Verfahren zur Herstellung eines Gehäuses für elektronische Bauteile ist in der US 2009/237939 A1 beschrieben.

Die Erfindung stellt sich daher die Aufgabe ein Verfahren zur Herstellung eines Außenverkleidungsteils für ein Kraftfahrzeug mit den eingangs beschriebenen Merkmalen anzugeben, dass es ermöglicht den Grundkörper des Außenverkleidungsteils so zu verändern, dass das Außenverkleidungsteil in den Bereichen der Erhebungen optisch ansprechend und gleichzeitig partiell von Licht durchleuchtbar wird.

Zur Lösung dieser Aufgabe ist erfindungsgemäß ein nachfolgend beschriebenes Verfahren vorgesehen:
Verfahren zur Herstellung eines Außenverkleidungsteils für ein Kraftfahrzeug, umfassend die folgenden Schritte:
   - Bereitstellen eines das Außenverkleidungsteil definierenden Grundkörpers, wobei der Grundkörper aus einem für Licht transparenten oder transluzenten Kunststoffmaterial besteht und eine bestimmungsgemäße Sichtseite und eine der Sichtseite gegenüberliegenden Rückseite aufweist, wobei eine Vielzahl von Erhebungen, die von der Oberfläche der Sichtseite des Grundkörpers abstehen vorgesehen sind, die einstückig mit dem Grundkörper ausgebildet sind;
   - Aufbringen einer lichtundurchlässigen Farbschicht auf die Sichtseite des Grundkörpers und auf die Erhebungen des Grundkörpers; wobei
in einem weiteren Schritt die Farbschicht auf den Erhebungen teilweise oder vollständig entfernt wird, sodass diese Bereiche der Erhebungen wieder von Licht durchstrahlbar sind und, dass nachfolgend zumindest auf diesen Bereichen eine von Licht durchstrahlbare Dekorschicht oder Dekorfolie aufgebracht wird, sodass das Außenverkleidungsteil in diesen Bereichen partiell von Licht durchleuchtbar ist.

Der Begriff "Licht" meint vorliegend nicht nur den für das menschliche Auge sichtbaren Teil des elektromagnetischen Spektrums, also Wellenlängen zwischen ca. 380 und 780 nm, sondern auch den infrarotnahen und infraroten Wellenlängenbereich von 780 nm bis 1 mm.

In vorteilhafter Weise lässt sich durch das erfindungsgemäße Verfahren ein Außenverkleidungsteil eines Kraftfahrzeugs herstellen welches in den Bereichen der Erhebungen gezielt durchleuchtbar ist zur Darstellung eines Funktionslichts oder eines Signallichts (insbesondere bei Dunkelheit oder Nacht) bei gleichzeitigem Erhalt einer Farboptik wenn die Beleuchtung hinter dem Außenverkleidungsteil deaktiviert ist bzw. das Umgebungslicht (insbesondere am Tag) die partielle Beleuchtung des Außenverkleidungsteils überstrahlt.

Die Farbschicht kann mehrschichtig aufgebaut sein. Die mehrschichtige Farbschicht kann insbesondere eine Primerschicht und wenigstens eine farbgebende Schicht aufweisen. Auch die Dekorschicht oder die Dekorfolie kann mehrschichtig aufgebaut sein.

Die Dekorschicht wird als weitere Farbschicht mittels eines Tampondruckverfahrens aufgebracht. Ein bevorzugtes Tampondruckverfahren umfasst hierbei die folgenden Schritte: Der Tampondruck ist ein indirektes Tiefdruckverfahren, bei dem eine Farbe durch einen elastischen Tampon aus beispielsweise Silikonkautschuk von einer Druckform als Farbschicht auf die Trägerstruktur (vorliegend die Bereiche der Erhebungen) übertragen wird. Die Übertragung der Farbschicht auf die Trägerstruktur erfolgt durch Anpressen in geeigneten Anpressstärken. Die Farbe, die übertragen werden soll, kann hierbei als eine Möglichkeit auf ein sogenanntes Klischee als die Druckform aufgebracht werden. Dabei kann die Farbe mit Hilfe einer Rakel, Rolle oder Bürste auf das Klischee aufgebracht werden. Anschließend setzt der Tampon auf dieses Klischee auf, hebt unter Mitnahme von Farbe wieder ab und fährt zu der Trägerstruktur. Dort senkt sich der Tampon, passt sich der Form der Trägerstruktur an und hinterlässt die Farbe auf der Trägerstruktur. Diese Bewegungen können beispielsweise von einer Verfahreinheit oder einem Roboter übernommen werden.

Im Fall einer Dekorfolie wird diese mittels eines Heißprägeverfahrens aufgebracht. Ein bevorzugtes Heißprägeverfahren umfasst hierbei die folgenden Merkmale: Heißprägeverfahren zum Übertragen einer Übertragungslage (Dekorfolie) einer Heißprägefolie bei einer Prägetemperatur und einem Prägedruck auf ein Substrat (vorliegend die Bereiche der Erhebungen), wobei die Übertragungslage auf einer Trägerfolie angeordnet ist und zwischen der Übertragungslage und der Trägerfolie eine Ablöseschicht angeordnet ist und/oder auf der Übertragungslage eine Kleberschicht angeordnet ist und, wobei ein Prägestempel vorgesehen ist zum Übertragen der Übertragungslage der Heißprägefolie auf das Substrat. Sowohl das Tampondruckverfahren als auch das Heißprägeverfahrens haben sich in Versuchen als besonders geeignet erwiesen, um die Dekorschicht oder die Dekorfolie auf den Bereichen der Erhebungen (auf denen die Farbschicht teilweise oder vollständig entfernt wurde) aufzubringen. In vorteilhafter Weise kann durch die Wahl dieser beiden Verfahren (Heißprägeverfahren oder Tampondruckverfahren) auf eine, eine Fehlbeschichtung verhindernde, Maskierung der umliegenden Bereiche verzichtet werden. Dies reduziert zum einen die Herstellungskosten und zum anderen wird die Herstellungsqualität verbessert.

Um in dem weiteren Schritt die Farbschicht auf den Erhebungen teilweise oder vollständig zu entfernen kann die Farbschicht bevorzugt mittels Laserstrahlung teilweise perforiert oder vollständig abgetragen werden. Auch ein die Schichtdicke der Farbschicht reduzieren das Abtragen nur eines Teils der Farbschicht ist denkbar. Die Nutzung eines Laserstrahlabtragungsverfahrens oder eines Laserstrahlperforierverfahrens ermöglicht eine hochpräzise und schnelle Durchführung dieses Verfahrensschrittes.

Neben der Auswahl einer an sich aufgrund des Materials transparenten oder transluzenten (also Lichtstrahlung passieren lassenden Materials) kann bevorzugt die Dekorschicht oder die Dekorfolie aufgrund ihrer Schichtdicke oder Foliendicke von Licht durchstrahlbar sein. Die Dekorschicht kann eine weitere Farbschicht, insbesondere eine weitere Farbschicht die metallische Partikel oder Flakes aufweist umfassen. Die Dekorfolie kann wenigstens eine Metallfolie umfassen. Vorteilhaft ergibt sich so bei beiden Varianten ein metallisch wirkendes Aussehen der Dekorschicht oder der Dekorfolie.

In einem weiteren Schritt kann über der Farbschicht und der Dekorschicht oder über der Farbschicht und der Dekorfolie eine diese versiegelnde, transparente oder transluzente Klarlackschicht und/oder eine zusätzliche Schutzschicht aufgebracht werden. Hierbei kann die zusätzliche Schutzschicht insbesondere ein Silan oder eine Silanverbindung, oder ein Polyurethan oder eine Polyurethanverbindung, oder ein Polyurea oder eine Polyureaverbindung umfassen.

Bevorzugt weist der Grundkörper eine Wandstärke im Bereich von 0,8 mm bis 5,5 mm auf.

Das herzustellende Außenverkleidungsteil kann insbesondere eine Stoßfängerverkleidung oder eine Kühlerverkleidung oder eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile sein.

Der Grundkörper kann mittels eines generativen Verfahrens (z.B. 3D-Druck) oder im Spritzgussverfahren oder durch eine Thermoformung bereitgestellt werden oder hergestellt sein.

Das transparente oder transluzente Kunststoffmaterial des Grundkörpers kann insbesondere Polycarbonat, Polymethylmethacrylat, Polystyrol (beispielsweise PS, ABS, ASA), thermoplastisches Polyester (beispielsweise PET, PBT), Polypropylen oder ein Bioplymer (beispielsweise Zelluloseacetat, Polyhydroxybutyrat, Polymilchsäure, Polyhydroxyalkaonat) umfassen. Ein weiterer Verfahrensschritt kann das Anordnen eines Leuchtelements zur Aussendung von Licht hinter der Rückseite des Grundkörpers sein.

Teil der Erfindung ist ferner ein Außenverkleidungsteil, hergestellt nach dem vorstehend beschriebenen Verfahren.

### Ausführungsbeispiele

Im Folgenden wird die Erfindung anhand lediglich ein Ausführungsbeispiel darstellender Zeichnungen erläutert. Es zeigen schematisch:

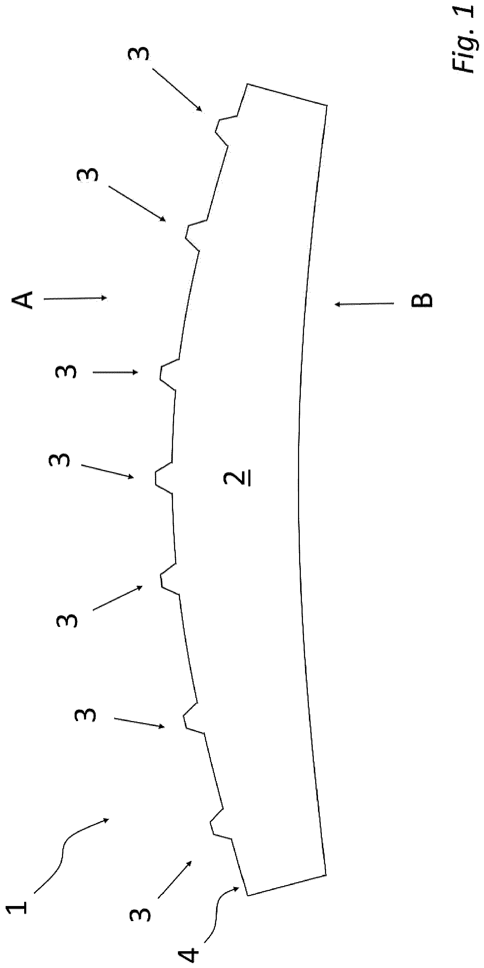

- Fig. 1 bis Figur 5: Querschnittsdarstellungen die den Verfahrensablauf zur Herstellung des Außenverkleidungsteils erläutern.

In den Figuren werden gleiche oder funktionsgleiche Elemente mit den gleichen Bezugszeichen versehen.

Das erfindungsgemäße Verfahren zur Herstellung eines Außenverkleidungsteils 1 für ein Kraftfahrzeug, umfasst die folgenden Schritte:
Bereitstellen eines das Außenverkleidungsteil 1 definierenden Grundkörpers 2, wobei der Grundkörper 2 aus einem für Licht transparenten oder transluzenten Kunststoffmaterial besteht und eine bestimmungsgemäße Sichtseite A und eine der Sichtseite A gegenüberliegenden Rückseite B aufweist, wobei eine Vielzahl von Erhebungen 3, die von der Oberfläche der Sichtseite A des Grundkörpers 2 abstehen vorgesehen sind, die einstückig mit dem Grundkörper 2 ausgebildet sind (vgl. Fig. 1).

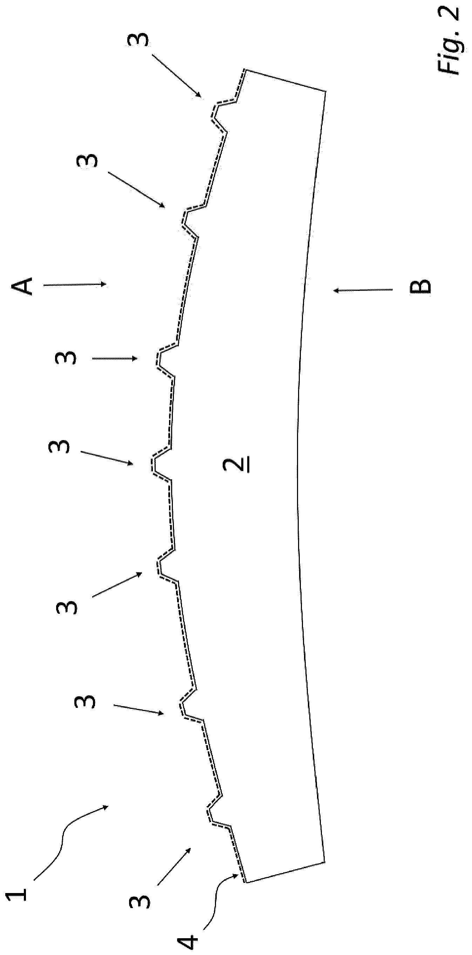

Aufbringen einer lichtundurchlässigen Farbschicht 4 auf die Sichtseite A des Grundkörpers 2 und auf die Erhebungen 3 des Grundkörpers 2 (vgl. Fig. 2).

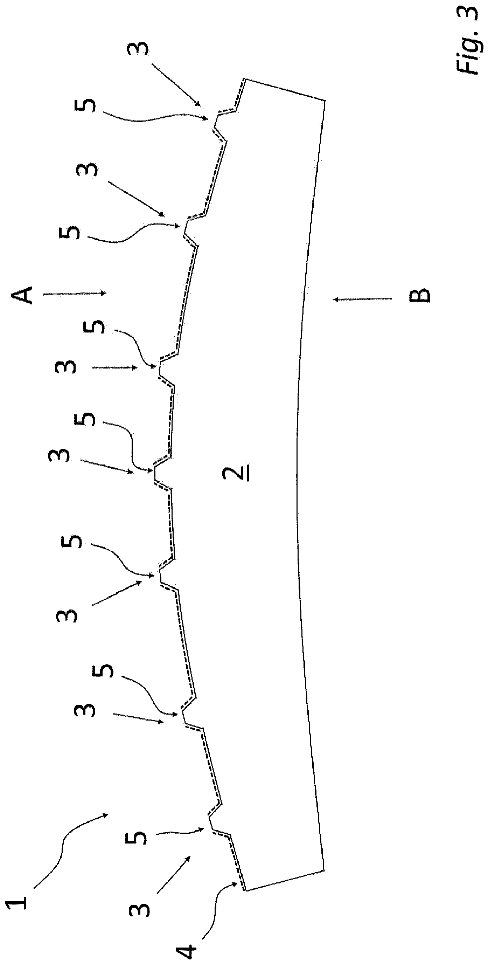

In einem weiteren Schritt wird die Farbschicht 4 auf den Erhebungen 3 teilweise oder vollständig entfernt, sodass diese Bereiche 5 der Erhebungen 3 wieder von Licht durchstrahlbar sind (vgl. Fig. 3).

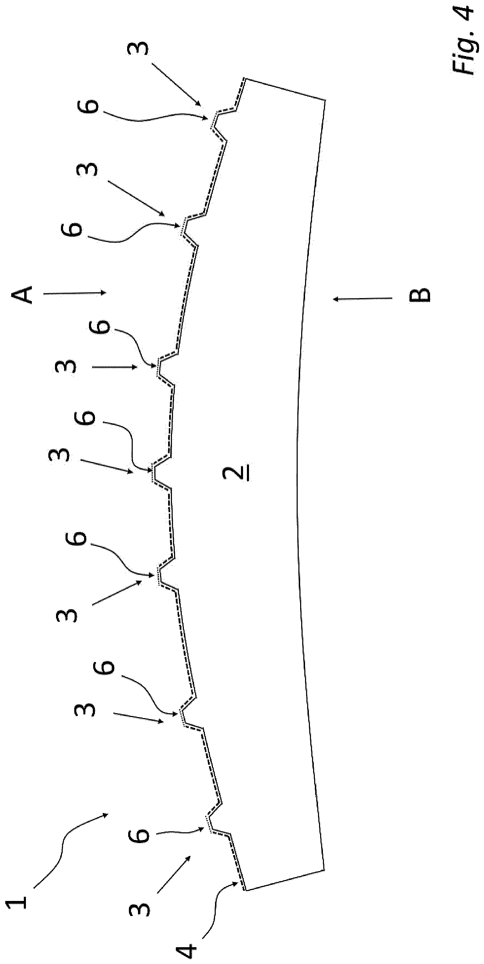

Nachfolgend wird zumindest auf diesen Bereichen 5 eine von Licht durchstrahlbare Dekorschicht 6 oder Dekorfolie 6 aufgebracht, sodass das Außenverkleidungsteil 1 in diesen Bereichen 5 partiell von Licht durchleuchtbar ist (vgl. Fig. 4).

Die Dekorschicht 6 wird hierbei mittels eines Tampondruckverfahren aufgebracht. Für den Fall, dass eine Dekorfolie 6 verwendet wird ist diese mittels eines Heißprägeverfahrens aufgebracht.

Die Farbschicht 4 wird mittels Laserstrahlung teilweise perforiert oder vollständig abgetragen, damit die Bereiche 5 der Erhebungen 3 wieder von Licht durchstrahlbar sind.

Die Dekorschicht umfasst eine weitere Farbschicht, insbesondere eine weitere Farbschicht die metallische Partikel oder Flakes aufweist umfasst. Im Fall der Verwendung einer Dekorfolie 6 kann diese wenigstens eine Metallfolie umfassen.

In einem weiteren Schritt wird über der Farbschicht 4 und der Dekorschicht 6 oder über der Farbschicht 6 und der Dekorfolie 6 eine diese versiegelnde, transparente oder transluzente Klarlackschicht 7 und/oder eine zusätzliche Schutzschicht 7 aufgebracht. Für den Fall, dass eine Schutzschicht 7 oder eine zusätzliche Schutzschicht 7 aufgebracht wird, kann diese Schutzschicht 7 insbesondere ein Silan oder eine Silanverbindung umfassen.

Der Grundkörper 2 weist eine Wandstärke im Bereich von 0,8 mm bis 5,5 mm auf.

Dass hier nur schematisch dargestellte Außenverkleidungsteil kann eine Stoßfängerverkleidung oder eine Kühlerverkleidung oder eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile sein.

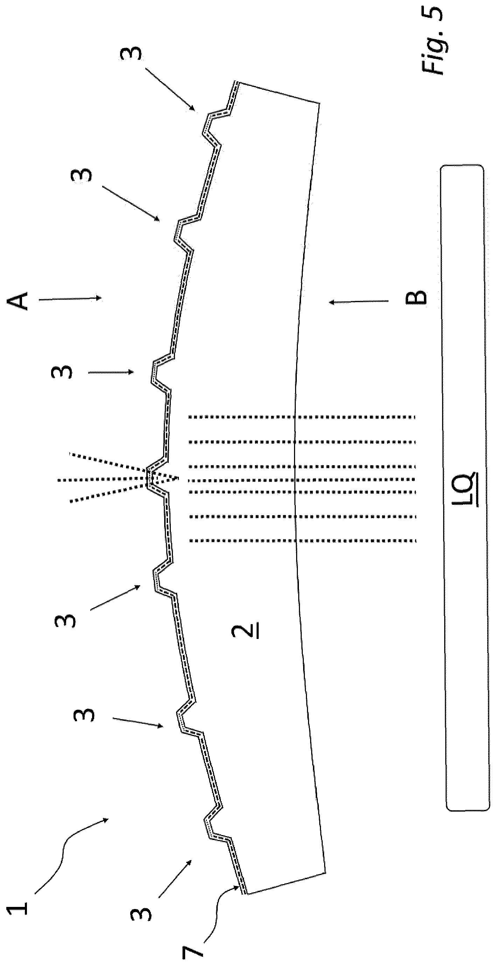

In der Fig. 5 ist ein weiterer Verfahrensschritt dargestellt, der das Anordnen eines Leuchtelements LQ zur Aussendung von Licht (durch die Punktlinien angedeutet) hinter der Rückseite B des Grundkörpers 2 sein.

## Patentansprüche

1. Verfahren zur Herstellung eines Außenverkleidungsteils (1) für ein Kraftfahrzeug, umfassend die folgenden Schritte:
- Bereitstellen eines das Außenverkleidungsteil (1) definierenden Grundkörpers (2), wobei der Grundkörper (2) aus einem für Licht transparenten oder transluzenten Kunststoffmaterial besteht und eine bestimmungsgemäße Sichtseite (A) und eine der Sichtseite (A) gegenüberliegenden Rückseite (B) aufweist, wobei eine Vielzahl von Erhebungen (3), die von der Oberfläche der Sichtseite (A) des Grundkörpers (2) abstehen vorgesehen sind, die einstückig mit dem Grundkörper (2) ausgebildet sind;
- Aufbringen einer lichtundurchlässigen Farbschicht (4) auf die Sichtseite (A) des Grundkörpers (2) und auf die Erhebungen (3) des Grundkörpers (2);
**dadurch gekennzeichnet, dass**
in einem weiteren Schritt die Farbschicht (4) auf den Erhebungen (3) teilweise oder vollständig entfernt wird, sodass diese Bereiche (5) der Erhebungen (3) wieder von Licht durchstrahlbar sind und, dass
nachfolgend zumindest auf diesen Bereichen (5) eine von Licht durchstrahlbare Dekorschicht (6) oder Dekorfolie (6) aufgebracht wird, wobei die Dekorschicht (6) mittels eines Tampondruckverfahren oder die Dekorfolie (6) mittels eines Heißprägeverfahrens aufgebracht wird, sodass das Außenverkleidungsteil (1) in diesen Bereichen (5) partiell von Licht durchleuchtbar ist.

2. Verfahren nach Anspruch 1, **dadurch gekennzeichnet, dass** die Farbschicht (4) mittels Laserstrahlung teilweise perforiert oder vollständig abgetragen wird.

3. Verfahren nach einem der vorstehenden Ansprüche, **dadurch gekennzeichnet, dass** die Dekorschicht (6) oder die Dekorfolie (6) aufgrund ihrer Schichtdicke oder Foliendicke von Licht durchstrahlbar ist.

4. Verfahren nach einem der vorstehenden Ansprüche, **dadurch gekennzeichnet, dass** die Dekorschicht (6) eine weitere Farbschicht, insbesondere eine weitere Farbschicht die metallische Partikel oder Flakes aufweist umfasst, oder die Dekorfolie (6) eine Metallfolie umfasst.

5. Verfahren nach einem der vorstehenden Ansprüche, **dadurch gekennzeichnet, dass** in einem weiteren Schritt über der Farbschicht (4) und der Dekorschicht (6) oder über der Farbschicht (6) und der Dekorfolie (6) eine diese versiegelnde, transparente oder transluzente Klarlackschicht (7) und/oder eine zusätzliche Schutzschicht (7) aufgebracht wird.

6. Verfahren nach Anspruch 5, **dadurch gekennzeichnet, dass** die zusätzliche Schutzschicht (7) insbesondere ein Silan oder eine Silanverbindung umfasst.

7. Verfahren nach einem der vorstehenden Ansprüche, **dadurch gekennzeichnet, dass** der Grundkörper (2) eine Wandstärke im Bereich von 0,8 mm bis 5,5 mm aufweist.

8. Verfahren nach einem der vorstehenden Ansprüche, **dadurch gekennzeichnet, dass** das Außenverkleidungsteil eine Stoßfängerverkleidung oder eine Kühlerverkleidung oder eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile ist.

## Claims

1. Method for producing an outer trim part (1) for a motor vehicle, comprising the following steps:
- providing a base body (2) defining the outer trim part (1), wherein the base body (2) consists of a plastic material that is transparent or translucent to light and has an intended visible side (A) and a rear side (B) opposite the visible side (A), wherein a plurality of elevations (3) projecting from the surface of the visible side (A) of the base body (2) are provided and are formed integrally with the base body (2);
- applying an opaque coloured layer (4) on the visible side (A) of the base body (2) and on the elevations (3) of the base body (2);
**characterised in that**
in a further step, the coloured layer (4) on the elevations (3) is partially or completely removed, so that light can again pass through these regions (5) of the elevations (3), and **in that**
a decorative layer (6) or decorative foil (6) that can be irradiated by light is subsequently applied at least to these regions (5), wherein the decorative layer (6) is applied by means of a pad printing process or the decorative foil (6) is applied by means of a hot stamping process, such that the outer trim part (1) can be partially irradiated by light in these regions (5).

2. Method according to claim 1, **characterised in that** the coloured layer (4) is partially perforated or completely removed by means of laser radiation.

3. Method according to any one of the preceding claims, **characterised in that** the decorative layer (6) or the decorative foil (6) can be irradiated by light due to its layer thickness or foil thickness.

4. Method according to any one of the preceding claims, **characterised in that** the decorative layer (6) comprises a further coloured layer, in particular a further coloured layer having metallic particles or flakes, or the decorative foil (6) comprises a metal foil.

5. Method according to any one of the preceding claims, **characterised in that** in a further step a transparent or translucent clear lacquer layer (7) and/or an additional protective layer (7) is applied over the coloured layer (4) and the decorative layer (6) or over the coloured layer (6) and the decorative foil (6).

6. Method according to claim 5, **characterised in that** the additional protective layer (7) comprises, in particular, a silane or a silane compound.

7. Method according to any one of the preceding claims, **characterised in that** the base body (2) has a wall thickness in the range between 0.8 mm and 5.5 mm.

8. Method according to any one of the preceding claims, **characterised in that** the outer trim part is a bumper trim or a radiator trim or a tailgate trim or a pillar trim or a door trim or a wing trim or a roof trim or a spoiler of a motor vehicle, or a component or assembly or constituent part of the aforementioned parts.

## Revendications

1. Procédé de fabrication d'une pièce d'habillage extérieur (1) pour un véhicule automobile, comprenant les étapes suivantes :
- la fourniture d'un corps de base (2) définissant la pièce d'habillage extérieur (1), le corps de base (2) étant constitué d'un matériau plastique transparent ou translucide à la lumière et présentant un côté visible (A) conforme à la destination et un côté arrière (B) opposé au côté visible (A), une pluralité de saillies (3) dépassant de la surface du côté visible (A) du corps de base (2) étant prévues, lesquelles sont réalisées d'un seul tenant avec le corps de base (2) ;
- l'application d'une couche de couleur opaque (4) sur le côté visible (A) du corps de base (2) et sur les saillies (3) du corps de base (2) ;
**caractérisé en ce que**
dans une autre étape, la couche de couleur (4) est partiellement ou complètement enlevée sur les saillies (3), de telle sorte que ces zones (5) des saillies (3) peuvent à nouveau être traversées par la lumière, et **en ce que**
ensuite, au moins sur ces zones (5), une couche décorative (6) ou une feuille décorative (6) pouvant être traversée par la lumière est appliquée, la couche décorative (6) étant appliquée au moyen d'un procédé de tampographie ou la feuille décorative (6) étant appliquée au moyen d'un procédé de marquage à chaud, de telle sorte que la pièce d'habillage extérieur (1) peut être partiellement traversée par la lumière dans ces zones (5).

2. Procédé selon la revendication 1, **caractérisé en ce que** la couche de couleur (4) est partiellement perforée ou complètement retirée au moyen d'un rayonnement laser.

3. Procédé selon l'une quelconque des revendications précédentes, **caractérisé en ce que** la couche décorative (6) ou la feuille décorative (6) peut être traversée par la lumière en raison de son épaisseur de couche ou de son épaisseur de feuille.

4. Procédé selon l'une quelconque des revendications précédentes, **caractérisé en ce que** la couche décorative (6) comprend une autre couche de couleur, notamment une autre couche de couleur qui présente des particules ou des paillettes métalliques, ou la feuille décorative (6) comprend une feuille métallique.

5. Procédé selon l'une quelconque des revendications précédentes, **caractérisé en ce que**, dans une autre étape, sur la couche de couleur (4) et la couche décorative (6) ou sur la couche de couleur (6) et la feuille décorative (6) est appliquée une couche de vernis transparent ou translucide (7) scellant celles-ci et/ou une couche de protection supplémentaire (7).

6. Procédé selon la revendication 5, **caractérisé en ce que** la couche de protection supplémentaire (7) comprend notamment un silane ou un composé de silane.

7. Procédé selon l'une quelconque des revendications précédentes, **caractérisé en ce que** le corps de base (2) présente une épaisseur de paroi dans la plage allant de 0,8 mm à 5,5 mm.

8. Procédé selon l'une quelconque des revendications précédentes, **caractérisé en ce que** la pièce d'habillage extérieur est un habillage de pare-chocs ou un habillage de radiateur ou un habillage de hayon ou un habillage de montant ou un habillage de porte ou un habillage d'aile ou un habillage de toit ou un spoiler d'un véhicule automobile, ou un composant ou un ensemble ou un élément constitutif des pièces précitées.
